# EUROPEAN PATENT APPLICATION

(11) **EP 3 285 228 A1**
(43) Date of publication of application: **21.02.2018**
(21) Application number: 15889306.5
(22) Date of filing: 21.10.2015
(51) Int. Cl.: G06Q 50/32, G06Q 50/28

(54) **UNMANNED MAIL/COURIER MANAGEMENT SYSTEM AND METHOD**

(30) Priority: 15.04.2015 KR 20150052848; 07.08.2015 KR 20150111865
(71) Applicant: Lee, Jae Yong, Seoul 03945 (KR)
(72) Inventor: Lee, Jae Yong, Seoul 03945 (KR)
(74) Representative: dompatent von Kreisler Selting Werner - Partnerschaft von Patent- und Rechtsanwälten mbB
(86) International application number: PCT/KR2015/011114
(87) International publication number: WO 2016/167426

(57) **Abstract**

The present invention relates to an unmanned mail/courier management system and method which can unmannedly receive a delivery of mail or a courier item, and can unmannedly store and receive a delivered mail or courier item. The present invention provides a configuration that enables a work, which is performed for unmanned reception and storage through interworking between an unmanned reception machine and a management server through a network in the art, to be input through and processed by a user terminal, and thus, does not require construction of a network for interworking with the management server in the unmanned reception machine for implementation thereof, thereby enabling easy installation of the unmanned reception machine, and minimizing a standby time by omitting a procedure of directly inputting in the unmanned reception machine.

## Description

### [Technical Field]

The present invention relates to an unmanned mail/courier management system and method which can unmannedly receive a delivery of a mail or a courier item and can unmannedly store and receive a delivered mail or courier item.

### [Background Art]

Recently, in accordance with increase of online transaction such as Internet shopping, a volume of parcels is increasing every year. However, actually, a workflow of a parcel delivery service company is not fast enough to meet the needs of users who want quick delivery of items.

For example, before delivering a parcel package, when a user selects a parcel delivery service company and requests the selected parcel delivery service company to collect the parcel wirely or via on-line, the package is sent through a courier who visits the user. Even though the visit of the courier varies depending on the parcel delivery service companies, most of them spend more than one day to collect the parcel package. Further, when the courier visits the user, parcel information such as an address to be delivered is input through a personal terminal such as a PDA or but mostly input by hand-writing by the courier and computerized to be input again in a collection terminal where packages are collected later. During this process, errors may be incurred by the courier or during a computerizing process, so that the package may be sent to a wrong place and thus the delivery is delayed.

Recently, in order to overcome the above-described disadvantage, an unmanned device which allows a user to directly send a parcel has been suggested. Representatively, there are "unmanned mail window" operated by a post office and "unmanned courier and delivery logistics system" (Korean Registered Patent No. 625253).

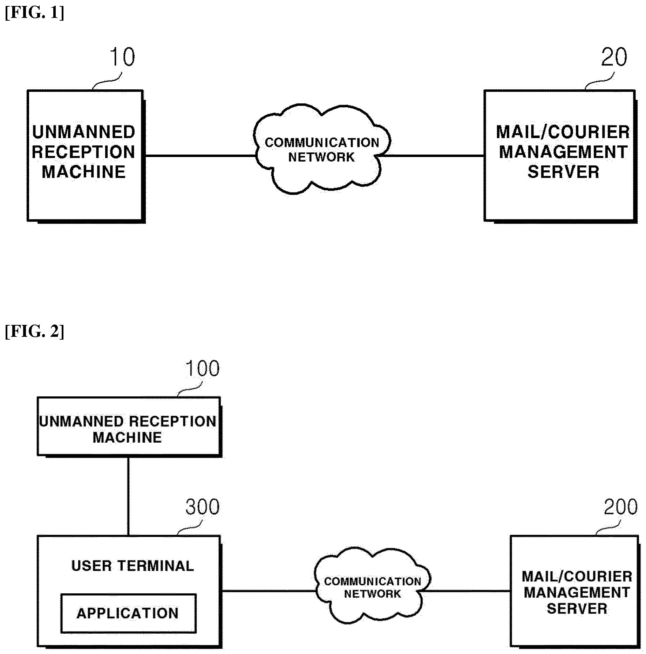

According to the "unmanned mail window" and the "unmanned courier and delivery logistics system" of the related art, as illustrated in FIG. 1, an unmanned reception machine 10 which unmannedly receives a mail or a courier item is linked to a mail/courier management server 20 through a network to be operated.

That is, when a user directly inputs a sender and a delivery address of a receiver through a touch screen in the unmanned reception machine 10, the delivery address is transmitted to the mail/courier management server 20 through a communication network to receive the delivery address. When the unmanned reception machine 10 measures a volume or a weight of the mail or courier item and the user makes a payment, a mail certificate stamp (label sheet) is output and the output mail certificate stamp is attached on the mail or courier item to be put into a reception box.

However, the unmanned reception machine 10 of the related art necessarily constructs a network to interwork with the mail/courier management server 20. To this end, there is a problem in that installation and maintenance costs are increased because a complicated communication line is required to be connected.

Further, even though it is unmanned reception, the user needs to input a delivery related address at the scene and it takes time for the user to manually input the address. Therefore, there is inconvenience in that the users still have to wait in a congestion time zone at a post office where the unmanned reception machine is provided.

In the meantime, in order to store and receive the mail or courier item delivered from the parcel delivery service company, recently, an unmanned reception machine is utilized in apartments to allow the user to receive the parcel item even in the absence of the recipient and safely receive the courier item without directly facing the courier even though the recipient stays at home or office.

However, such an unmanned reception machine is also operated in association with a management server for remote integrated management as illustrated in FIG. 1 so that the network construction is essential when the unmanned reception machine is installed. That is, installation and maintenance costs are increased because a complicated communication line needs to be connected in order to construct the network.

Further, since the unmanned reception machine is unmannedly operated, inquiries asking that a door of a storage box is not open or whether the courier item is correctly stored are frequently asked. In order to respond to the frequent inquiries, status information of the storage box needs to be updated in real time and the connection with the server is inevitable.

Related prior art is disclosed in Korean Unexamined Patent Application Publication No. 10-2014-0115614 (entitled unmanned delivery system using the smart phone and published on October 1, 2014).

### [Disclosure]

### [Technical Problem]

The present invention has been made in an effort to provide an unmanned mail/courier management system which provides a work for unmanned reception performed by an unmanned reception machine and a management server interworking each other to be performed by a user terminal to be conveniently installed in the unmanned reception machine without constructing a network and a method thereof. Specifically, according to the present invention, a user terminal inputs mail information including addresses of a sender and a recipient in advance to register the reception so that a process of directly inputting the mail information in the unmanned reception machine is omitted and thus a standby time for a procedure performed through the unmanned reception machine is minimized, thereby avoiding inconvenience due to manual input of the user.

Further, another object of the present invention is to provide a delivery fare calculated according to a volume or a weight of the mail or courier item in the unmanned reception machine to the user terminal and make a payment through a user terminal so that a payment module for making a payment and a communication module for connecting Internet from the unmanned reception machine are omitted to significantly reduce a manufacturing cost of the unmanned reception machine.

Further, another object of the present invention is to provide an unmanned mail/courier management system and method which easily install an unmanned reception machine at the scene and save a cost for a network construction because a delivered mail or courier item is unmannedly stored in an unmanned reception machine and storage information is transmitted to a management server using a terminal of a deliverer so that the management server transmits and informs the storage information to a recipient to safely store and receive the item and the management server may collect the storage information without being connected to the unmanned reception machine.

Further, still another object of the present invention is to back-up a storage status for an unmanned reception machine by a management server by transmitting entire storage situations for the unmanned reception machine together when a deliverer transmits storage information on an item stored in the unmanned reception machine to the management server and update recent information whenever items are stored in the unmanned reception machine so that it is possible to perform remote integrated management and promptly respond to inquiries of the deliverer about the unmanned reception machine, thereby efficiently operating a call center.

### [Technical Solution]

To this end, an unmanned mail/courier management system according to an exemplary embodiment of the present invention includes: an application which is installed in a user terminal and receives mail information of a sender and a recipient for a mail or courier item from a user to unmannedly provide a reception registration service; a mail/courier management server which interworks with the application to provide and manage an unmanned reception service; and an unmanned reception machine which accommodates the mail or courier item to measure at least one of a weight and a volume, provides the measured information to the user terminal, and outputs a label sheet for the measured mail or courier item.

An unmanned reception machine according to an exemplary embodiment of the present invention includes: an accommodating unit in which a mail or courier item is inserted; a volume/weight measuring unit which measures at least one of a volume and a weight of a mail or courier item inserted in the accommodating unit; a control unit which provides measurement information of the mail or courier item measured by the volume/weight measuring unit to a user terminal; and a label output unit which outputs a label sheet for the mail or courier item measured by the volume/weight measuring unit.

A mail/courier management method according to an exemplary embodiment of the present invention includes: receiving mail information including addresses of a sender and a recipient for a mail or courier item from a user by an application installed in a user terminal; measuring at least one of a weight and a volume for the mail or courier item by an unmanned reception machine; providing measurement information of the mail or courier item to the user terminal, by the unmanned reception machine; and outputting a label sheet for the mail or courier item by the unmanned reception machine.

In the meantime, an unmanned mail/courier management system according to another exemplary embodiment of the present invention includes: an unmanned reception machine which includes a plurality of unit storage boxes which stores a mail or courier item and when a storage setting for the unit storage box is input by manipulation of a deliverer who delivers the mail or courier item, generates the input storage information as a code and outputs the code on a screen; a deliverer terminal which recognizes the code generated by the unmanned reception machine to transmit storage information corresponding to the code; and; and a mail/courier management server which collects and stores the storage information corresponding to the code from the deliverer terminal.

A control method of an unmanned mail/courier management system according to another exemplary embodiment of the present invention includes: receiving storage settings for a plurality of unit storage boxes by manipulation of a deliverer who delivers a mail or courier item, by an unmanned reception machine; generating storage information input from the deliverer as a code and outputting the code on a screen by the unmanned reception machine; recognizing the code output on a screen of the unmanned reception machine by a deliverer terminal; and transmitting storage information corresponding to the code to a mail/courier management server by the deliverer terminal.

### [Advantageous Effects]

According to an exemplary embodiment of the present invention, all unmanned reception processes performed by an unmanned reception machine regarding to the delivery are performed by interworking with a user terminal so that there is no need to construct a network between the unmanned reception machine and a server and thus, it is easy to install the unmanned reception machine and a maintenance cost for a network error may be reduced.

Further, according to the exemplary embodiment of the present invention, since a user may save a time for visiting a place where an unmanned reception machine is provided such as a post office to input main information, a standby time to be handled by the unmanned reception machine is minimized and a working time in the congested post office may be reduced.

Further, it is effective because a delivery cost of a mail or courier item calculated by the unmanned reception machine is transmitted to the user terminal to allow the user terminal to make a payment so that a payment module for making a payment and a communication module for Internet connection are omitted from the unmanned reception machine to save a manufacturing cost of the unmanned reception machine.

According to another exemplary embodiment of the present invention, a deliverer who delivers a mail or courier item stores the mail or courier item in the unmanned reception machine and transmits storage information to the management server using a terminal of the deliverer so that overall storage information necessary for integrated management is provided by the deliverer. Therefore, there is no need to construct a network between the unmanned reception machine and a management server and thus the unmanned reception machine may be easily installed and a maintenance cost for a network error may be saved.

Further, a manager of the unmanned reception machine may collect entire storage situations for the unmanned reception machine without being connected to the unmanned reception machine to back up a database and effectively perform remote integrated management based on the database and promptly respond to inquiries about the unmanned reception machine so that a call center may be effectively operated.

Further, according to another exemplary embodiment of the present invention, when a call center inquiry is requested to the unmanned reception machine, a code including a recent storage situation is immediately generated and the call center obtains the recent storage situation included in the code by means of a terminal of a user so that it is possible to correctly respond clients.

Further, the reception may easily receive information stored in the unmanned reception machine to easily receive the mail or courier item even in the absence and when the item is stored, a passcode of the unmanned reception machine is used. Therefore, the passcode is not open to the other party so that theft may be prevented.

### [Description of Drawings]

FIG. 1 is a block diagram illustrating a network configuration of an unmanned mail/courier management system of the related art.
FIG. 2 is a block diagram illustrating a network configuration of an unmanned mail/courier management system according to an exemplary embodiment of the present invention.
FIGS. 3 to 5 are examples illustrating an outer appearance of an unmanned reception machine which is applied to an unmanned mail/courier management system according to an exemplary embodiment of the present invention.
FIG. 6 is a detailed diagram illustrating an unmanned reception machine according to an exemplary embodiment of the present invention.
FIG. 7 is a detailed diagram illustrating a user terminal according to an exemplary embodiment of the present invention.
FIG. 8 is a flowchart illustrating an unmanned mail/courier management method according to an exemplary embodiment of the present invention.
FIG. 9 is a flowchart for explaining a method of providing measurement information to a user terminal through a near-field wireless communication by an unmanned reception machine in step S105 of FIG. 8.
FIG. 10 is a flowchart for explaining a method of providing measurement information to a user terminal using a code recognition method by an unmanned reception machine in step S105 of FIG. 8.
FIGS. 11 and 12 are views illustrating a sender/recipient information input screen and an approval code providing screen provided in an unmanned mail/courier management method according to an exemplary embodiment of the present invention.
FIG. 13 is a view illustrating a network configuration of an unmanned mail/courier management system according to another exemplary embodiment of the present invention.
FIG. 14 is an exemplary view illustrating an outer appearance of an unmanned reception machine which is applied to an unmanned mail/courier management system according to another exemplary embodiment of the present invention.
FIG. 15 is a detailed diagram illustrating an unmanned reception machine according to another exemplary embodiment of the present invention.
FIG. 16 is a detailed diagram of a mail/courier management server which is applied to an unmanned mail/courier management system according to another exemplary embodiment of the present invention.
FIG. 17 is a flowchart illustrating an unmanned mail/courier management method according to another exemplary embodiment of the present invention.
FIGS. 18 to 20 are views a setting screen provided in an unmanned mail/courier management method according to another exemplary embodiment of the present invention.
FIG. 21 is a view illustrating an information screen which is provided to a recipient terminal in an unmanned mail/courier management method according to another exemplary embodiment of the present invention.

### [Best Mode]

It should be noted that technical terminologies used in the present specification are used to describe a specific exemplary embodiment but are not intended to limit the present invention. Further, the technical terminologies which are used in the present specification should be interpreted to have meanings that are generally understood by those with ordinary skill in the art to which the present invention pertains, unless specifically defined to have different meanings in the present invention, but not be interpreted as an excessively comprehensive meaning or an excessively restricted meaning.

A singular form used in the present specification may include a plural form unless it has a clearly opposite meaning in the context. Terminologies such as "be configured by" or "include" in the present invention should not be interpreted to necessarily include all of plural components or plural steps described in the present invention, but should be interpreted not to include some of the components or steps or to further include additional components or steps.

Hereinafter, exemplary embodiments of the present invention will be described in detail with reference to the accompanying drawings. For reference, in the exemplary embodiments of the present invention, an unmanned reception service and an unmanned storage and reception service are separately described in a mail and courier system.

First, an unmanned reception service which unmannedly accesses a delivery of mail or courier items will be described with reference to FIGS. 2 to 13.

FIG. 2 is a block diagram illustrating a network configuration of an unmanned mail/courier management system according to an exemplary embodiment of the present invention.

An unmanned mail/courier management system according to an exemplary embodiment of the present invention includes an unmanned reception machine 100, a mail/courier management server 200, and a user terminal 300 and is characterized in that the unmanned reception machine 100 is connected to the user terminal 200 without interworking with the mail/courier management server 200 to perform unmanned reception.

Here, the user terminal 300 is a terminal which is possessed by a sender and the sender may be an employee of a parcel delivery service company or an individual.

A dedicated application which provides an unmanned mail/courier reception service is installed in the user terminal 300 and unmanned reception of the mail or courier item is registered through the installed dedicated application. At the time of registration, the user terminal 300 essentially inputs mail information on a sender and a recipient for a mail or courier item to be sent and additionally inputs a delivery type. The mail information on the sender and the recipient includes a name, an address, a postal code, and a contact number of the sender or the recipient. The delivery type includes a registered mail, a regular mail, a registered parcel, a regular parcel, and an item which needs to handle with care among parcels.

Further, the user terminal 300 may calculate a delivery cost based on at least one of a volume and a weight of the mail or courier item through an application. Alternatively, the user terminal may transmit at least one measurement information of the volume and the weight of the mail or courier item to the mail/courier management server 300 through the application to request calculation of the delivery cost and receive the calculated delivery cost from the mail/courier management server 300.

Information on the application is stored and managed in the mail/courier management server 200 and the application is installed such that the user terminal 300 accesses the mail/courier management server 200 or an application online marker (for example, Apple's App store or Android market app store) by the user terminal 300 to download the application.

When the application is executed by the user terminal 300, the application accesses the mail/courier management server 200, transmits the mail information of the mail or courier item and the delivery type input from the user terminal 300 to the mail/courier management server 200, receives a reception number from the mail/courier management server 200 when the registration of the unmanned reception is completed, and displays the reception number on a screen of the user terminal 300.

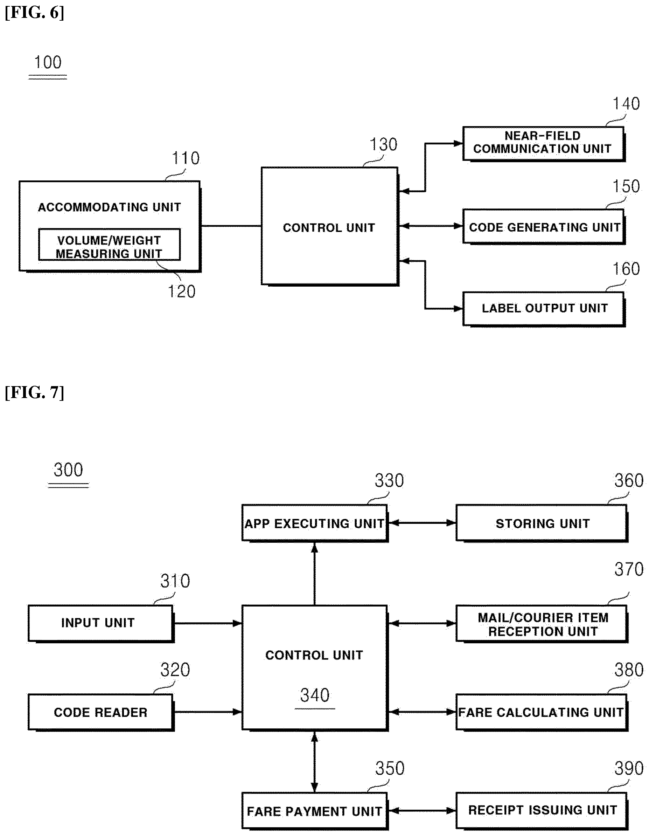

Further, the user terminal 300 pays for the mail or courier item through the application. In this case, a payment module for payment is installed in the user terminal 300 and the payment module interworks with the application to perform a function. A detailed configuration of the user terminal 300 for this will be described below with reference to FIG. 7.

As the user terminal 300, a mobile device such as a smart phone, a phablet, or a tablet may be mainly applied. However, the user terminal is not limited thereto and a terminal such as a PC or a notebook may be applicable regardless of the type as long as the terminal accesses the mail/courier management server 200 to perform unmanned reception.

The mail/courier management server 200 receives information on the mail or courier item and the delivery type from the user terminal 300 by means of a communication network and provides the reception number to the user terminal 300 to register and manage the unmanned reception. In this case, the mail/courier management server 200 receives a request for unmanned reception from the user terminal 300 through an application and transmits the reception number therefor to manage an unmanned reception service.

Further, the mail/courier management server 200 calculates a delivery cost based on the information on the mail or courier item according to the request of the user terminal 300 and provides the calculated delivery cost to the user terminal 300.

The unmanned reception machine 100 measures at least one of a weight and a volume of the mail or courier item to be sent and provides the measured information to the user terminal 300. In this case, the unmanned reception machine 100 provides an approval code for the mail or courier item together with the measured information. The approval code is not displayed in an encrypted state until the payment is made by the user terminal 300. When the payment is completed, the approval code is output onto the screen to be identified.

Further, the unmanned reception machine 100 may output a label sheet according to fare payment for the measured mail or courier item.

Specifically, since the unmanned reception machine 100 according to the exemplary embodiment of the present invention may omit works for inputting main information necessary for unmanned reception and payment, there is no need to interwork with the mail/courier management server 200. Moreover, the approval code in accordance with the unmanned reception of the mail or courier item is provided to the user terminal 300 and is displayed on the screen after making a payment to allow the user to identify the approval code. Therefore, even authentication for payment may be performed without interworking with the mail/courier management server 200. Therefore, network construction (for example, LAN installation work) for connection with the mail/courier management server 200 may be omitted so that the unmanned reception machine 100 may be easily installed regardless of a location and a manufacturing cost may also be reduced. Further, a standby time for a work through the unmanned reception machine 100 even in a congestion time zone may be significantly reduced.

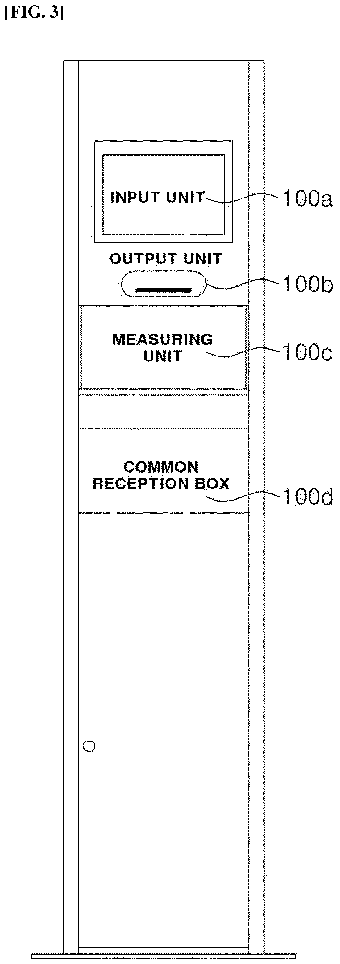

FIGS. 3 to 5 are examples illustrating an outer appearance implementing an unmanned reception machine 100 according to an exemplary embodiment of the present invention. For example, an unmanned reception machine illustrated in FIG. 3 is a kiosk type and includes an input unit 100a which is capable of displaying and inputting information necessary for using an unmanned reception service, an output unit 100b which outputs a label sheet, a measuring unit 100c which measures a weight or a volume, and a reception storage box 100d which temporarily stores the received and registered mail or courier items before collecting the items.

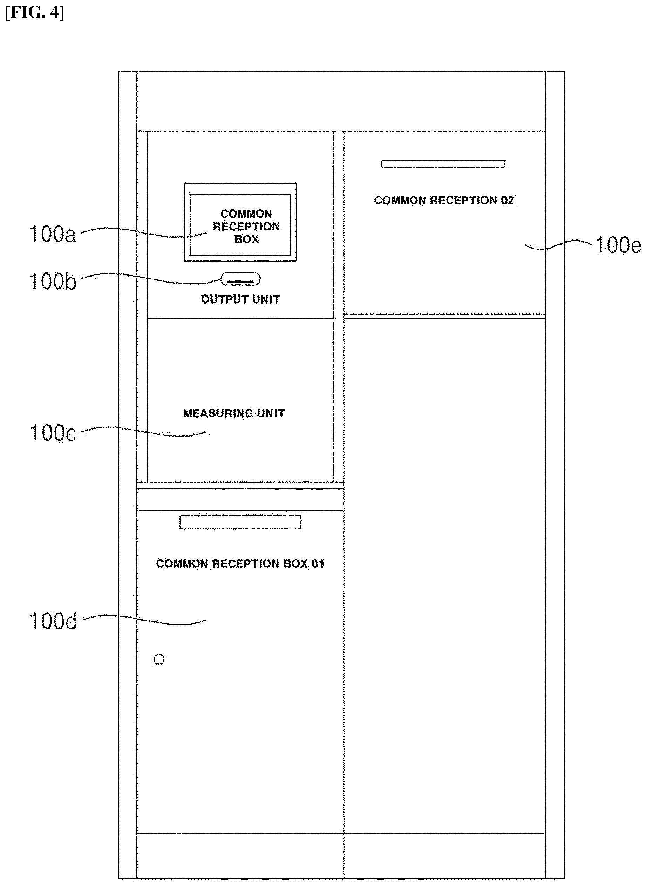

An unmanned reception machine illustrated in FIG. 4 is similar to the unmanned reception machine of FIG. 3 and includes two or more reception storage boxes 100d and 100e which temporarily store the mail or courier items before collecting the items so that the mail and courier items are classified or the courier items are classified according to volumes to be stored.

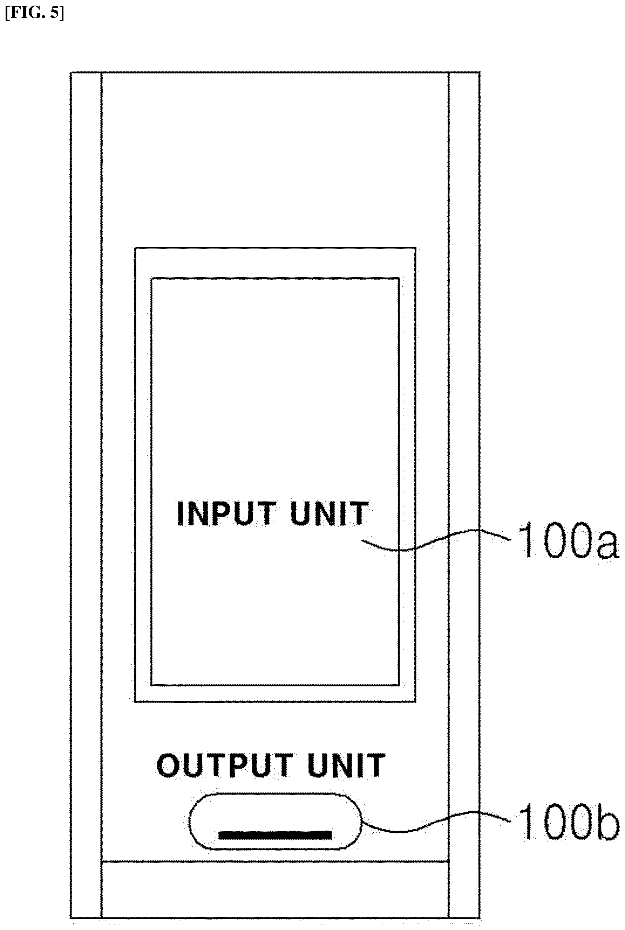

An unmanned reception machine 100 illustrated in FIG. 5 is an ultra-small terminal and includes only an input unit 100a which is capable of displaying and inputting information and an output unit 100b which outputs a label sheet. When the ultra-small unmanned reception machine 100 is used, configurations such as a measuring unit 100c which measures a weight or a volume or a reception storage box 100d need to be separately provided. Therefore, it is advantageous in that the ultra-small unmanned reception machine 100 is easily applied to a convenient store or a post office window where the measuring unit 100c and the reception storage 100d are already provided.

FIG. 6 is a view illustrating an unmanned reception machine according to an exemplary embodiment of the present invention.

The unmanned reception machine 100 according to an exemplary embodiment of the present invention is a configuration for providing an unmanned reception service and includes an accommodating unit 110, a volume/weight measuring unit 120, a control unit 130, a near-field communication unit 140, a code generating unit 150, and a label output unit 160.

In the accommodating unit 110, a space for accommodating a mail or courier item is provided. The accommodating unit 110 is different from the reception storage box of the unmanned reception machine 100 which has been described above and is a space for measuring a volume or a weight of the mail or courier item.

The volume/weight measuring unit 120 is installed in the accommodating unit 110 to measure a volume or a weight of the mail or courier item inserted in the accommodating unit 110.

The volume/weight measuring unit 120 may use at least one sensor. For example, a weight sensor is used to measure a weight of the mail or courier item and a camera or an IR sensor is used to measure a volume (size) of the mail or courier item.

The control unit 130 is applied with information measured through the volume/weight measuring unit 120 and provides the information to the user terminal. Further, the control unit 130 may provide an approval code for the mail or courier item to the user terminal together with the information measured through the volume/weight measuring unit 120. To this end, the control unit 130 is connected to the near-field communication unit 140 or the code generating unit 150 to provide the measured information to the user terminal by a near-field wireless communication method or a code recognition method.

The near-field communication unit 140 is activated by the control of the controller 130 and performs near-field wireless communication with the user terminal.

The code generating unit 150 generates a code including the information measured through the volume/weight measuring unit 120 and the approval code for the mail or courier item. The code may include a one-dimensional or two-dimensional barcode, a radio frequency identification (RFID), a quick response (QR) code, or a near field communication (NFC) code.

For example, when the near-field wireless communication method is used, the control unit 130 interworks with the near-field communication unit 140 to guide a screen which is capable of performing near-filed wireless communication with the user terminal. Thereafter, when the near-field wireless communication is connected with the user terminal, the control unit 130 transmits the measured information to the user terminal by means of the near-field communication unit 140 together with the approval code of the mail or courier item.

When the code recognition method is used, the control unit 130 outputs the code generated by the code generating unit 150 to the screen to guide the user terminal to recognize the code by scanning the screen.

In the meantime, when the code is generated, the code generating unit 150 may generate the code including information on a current storage situation which is temporarily stored in the reception storage box of the unmanned reception machine 100. In this case, basically, identification ID information for the unmanned reception machine is included. Further, when one or more reception storage boxes are provided, the code including storage situation information for the entire reception storage boxes may be generated. By doing this, the entire reception storage situation information for the unmanned reception machine 100 is transmitted to the mail/courier management server while transmitting one reception related information to the mail/courier management server whenever unmanned reception is generated so that the mail/courier management server may back up the entire reception storage situation information in real time.

The control unit 130 receives the approval code which is input by the user and determines whether the input approval code matches the approval code which is provided to the user terminal. When the approval codes match, the control unit 130 requests the label output unit 160 to output a label sheet of the mail or courier item.

The label output unit 160 outputs a label sheet according to fare payment for the mail or courier item. Further, the label output unit 160 may output a cover page including mail information for the mail or courier item and a delivery type. In this case, the label output unit 160 may obtain and apply the mail information and the delivery type which have been already registered for the mail or courier item from the user terminal or the mail/courier management server.

Further, the label output unit 160 may output a label sheet for the mail or courier item measured regardless of the fare payment. In this case, the label sheet may include measurement information on the measured mail or courier item or the approval code.

FIG. 7 is a detailed diagram of a user terminal which is applied an unmanned mail/courier management system according to another exemplary embodiment of the present invention.

The user terminal 300 includes an input unit 310, a code reader 320, an app executing unit 330, a control unit 340, a fare payment unit 350, a storing unit 360, a mail/courier item reception unit 370, a fare calculating unit 380, a receipt issuing unit 390.

The input unit 310 includes a manipulating unit which allows a user to input information necessary to register the unmanned reception. The manipulating unit may include a keypad, a keyboard, and a mouse and further include a virtual keyboard using touch input. The virtual keyboard may be formed to be integrated with a display screen provided as a touch screen.

The code reader 320 scans the barcode, the RFID code, the QR code, or the NFC tag to recognize information included in the code. The code reader 120 may include a barcode reader, an RFID reader, a QR code reader, or an NFC tag reader depending on a type of code.

The code reader 320 may be activated by directly executing a code reader icon by the user. However, the code reader 320 may be implemented such that when the unmanned reception registration is completed through the mail/courier item reception unit 370, the code reader 320 is automatically activated so that a screen of the user terminal 300 may be converted into a scan screen.

In the exemplary embodiment of the present invention, the code reader 320 may recognize the measurement information and an authentication number of the mail or courier item included in the code by scanning the screen of the unmanned reception machine. Further, the code reader 320 may recognize the entire storage situation information for usage history of the unmanned reception machine.

When it is requested to execute the app of the user, the app executing unit 330 extracts application information stored in the storing unit 360 to execute the application.

The mail/courier item reception unit 370 processes and registers unmanned reception for the mail or courier item through the application executed through the app executing unit 330. That is, the mail/courier item reception unit 370 requests to input mail information of the sender and the recipient for the mail or courier item and the delivery type through the application and main information received from the input unit 310 by the request is stored in the storing unit 360. The stored information is transmitted to the mail/courier management server 300 (see FIG. 2) through the application to be registered in the server and the mail/courier item reception unit 370 receives the reception number from the mail/courier management server 200 (see FIG. 2) as a result of registration. The inputting of the delivery type may be omitted when the unmanned reception service is limited to a dedicated reception machine for one of the mail and courier items.

The fare calculating unit 380 calculates a delivery fare based on mail information or the delivery type of the mail or courier item whose measurement information of the mail or courier item obtained through the code reader 320 or the near-field communication has been registered through the mail/courier item reception unit 370 in advance. As a calculating method, an algorithm which differently calculates the fare according to a weight, a volume, a delivery distance, and a delivery type of the mail or courier item may be applied and the algorithm may be included in the application. In this case, when it is required to update the algorithm, the application is updated by being connected to the mail/courier management server or the app store.

Alternatively, the fare calculating unit 380 may be connected to the mail/courier management serve to obtain a delivery fare without directly calculating the delivery fare. That is, the fare calculating unit 380 transmits the measurement information of the mail or courier item obtained through the code reader 320 or the near-field communication to the mail/courier management server to request calculation of the delivery fare and receives the calculated delivery fare from the mail/courier management server. In this case, the fare calculating unit 380 may transmit not only code information obtained through the code reader 320, that is, the measurement information of the mail or courier item but also entire storage situation information for the unmanned reception machine included in the code to the mail/courier management server.

The fare payment unit 350 includes a payment module which is connected to a payment company including card companies and banks to provide a payment service. Therefore, the fare payment unit 350 pays for a delivery fare of the mail or courier item calculated in the fare calculating unit 380. As a payment method, card payment, deposit without a bankbook, account (virtual account) transfer, mobile payment, or point payment may be used.

When the fare payment is completed through the fare payment unit 350, the receipt issuing unit 390 issues a receipt therefor.

When the application execution is requested by the user through the input unit 310, the control unit 340 transmits the request to the app executing unit 330 and applies measurement information obtained through the code reader 320 or the near-field communication to request to calculate the delivery fare.

In this case, the control unit 340 obtains the approval code for the mail or courier item together with the measurement information through the code reader 320 or the near-field communication and separately stores the obtained approval number in the storing unit 360 or temporarily stores the approval number in an encrypted state so as not to be displayed on the screen.

Further, the control unit 340 may request the fare payment unit 350 to pay for the delivery fare calculated in the fare calculating unit 380. When the payment is completed by the fare payment unit 350 by the payment request, the control unit 340 displays the approval code on the screen to be identified by the user.

A unmanned mail/courier management method according to an exemplary embodiment of the present invention will be described based on the above-described configurations of the user terminal and the unmanned reception machine.

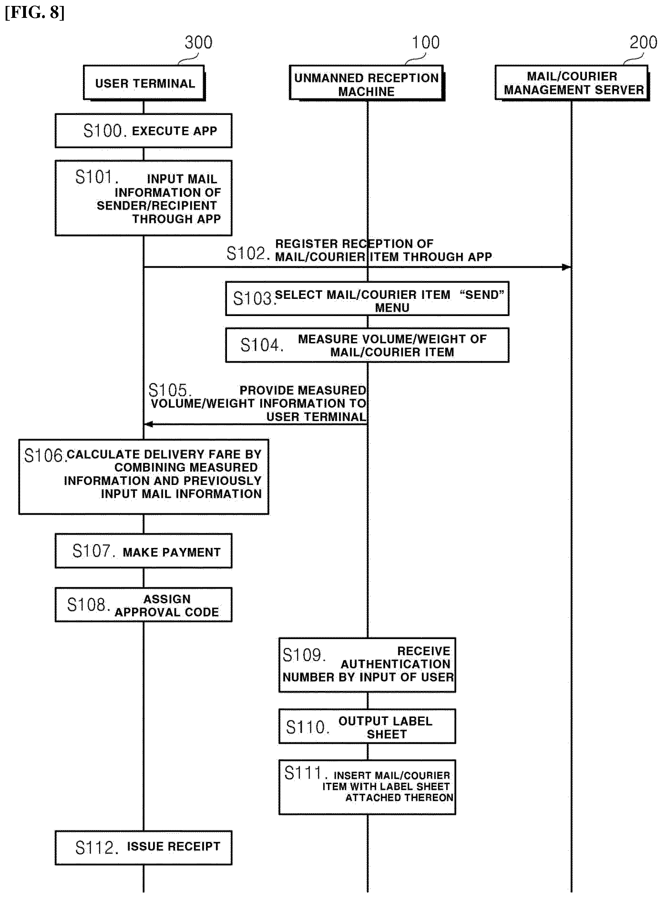

FIG. 8 is a flowchart illustrating an unmanned mail/courier management method according to an exemplary embodiment of the present invention.

First, in step S100, the user terminal 300 executes an application installed in the terminal.

Next, in steps S101 and S102, the user terminal 300 inputs mail information of the sender or the recipient through the executed application and transmits the input mail information to the mail/courier management server 200 to register the unmanned registration, in a mail/courier item receiving unit. When the registration of the unmanned reception is completed, the user terminal 300 receives the reception number from the mail/courier management server 200 to confirm that the reception registration is completed.

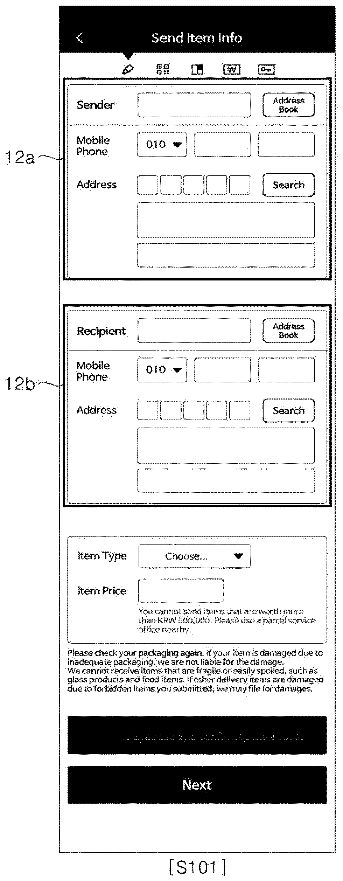

For example, FIG. 11 illustrates a screen for inputting mail information 12a and 12b of the sender and recipient to register unmanned reception. The input screen includes a mail information input section 12a of the sender in which at least a name, a contact number, and an address for the mail or courier item to be sent are input and a mail information input section 12b of the recipient in which at least a name, a contact number, and an address of the recipient are input. Further, the input screen includes a section for inputting a delivery type (a registered mail, a regular mail, a registered parcel, a regular parcel, and an item which needs to handle with care among parcels.

Next, in step S103, the user selects a "send" menu for sending the mail or courier item on a first screen of the unmanned reception machine 100 and thus the unmanned reception machine 100 receives the selection of the "send" menu.

Next, in step S104, the unmanned reception machine 100 measures at least one of the volume and the weight of the mail or courier item to be sent.

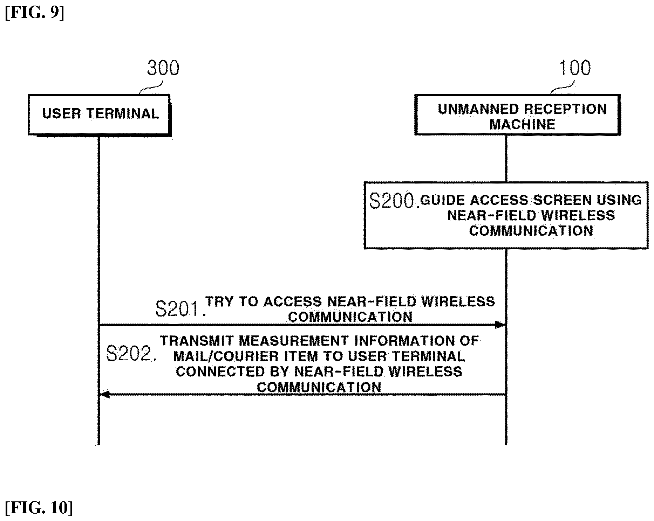

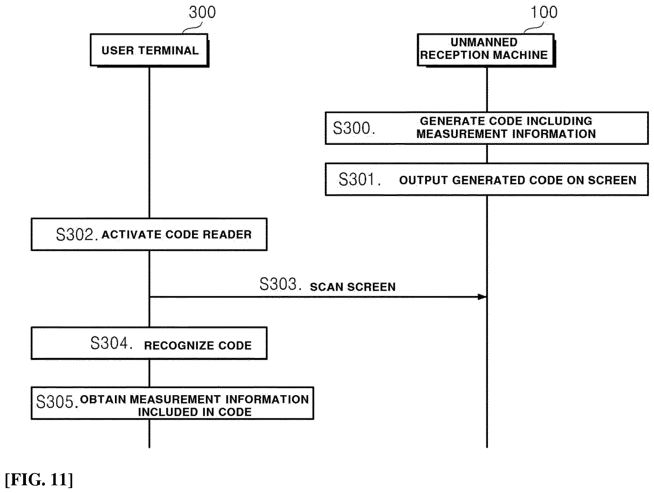

Next, in step S105, the unmanned reception machine 100 provides the measurement information of the mail or courier item to the user terminal 300. As the providing method, any one of a method using a near-field wireless communication and a code recognition method illustrated in FIGS. 9 and 10 may be used.

Further, in step S105, the unmanned reception machine 100 may provide the approval code for the mail or courier item to the user terminal 300 together with the measurement information of the mail or courier item. In this case the approval code is provided to the user terminal 300 in an encrypted state so that the approval code may be displayed or may not be displayed depending on whether to make a payment.

Further, in above-described step S105, the unmanned reception machine 100 may provide the entire storage situation information for a usage history of the unmanned reception machine 100 to the user terminal 300 together with the measurement information of the mail or courier item.

Next, in step S106, the user terminal 300 calculates a delivery fare by combining the measurement information of the mail or courier item provided from the unmanned reception machine 100 with the mail information or the delivery type which has been already input. The delivery fare may be calculated by the application in the user terminal 300 or by being connected to the mail/courier management server 200.

When the user terminal 300 is connected to the mail/courier management server to calculate the delivery fare, the user terminal 300 transmits the measurement information of the mail or courier item provided from the unmanned reception machine 100 to the mail/courier management server 200 to request calculation of the delivery fare and the user terminal 300 may receive the delivery fare from the mail/courier management server 200 upon the request.

Next, in step S107, the user terminal 300 makes a payment for the delivery fare.

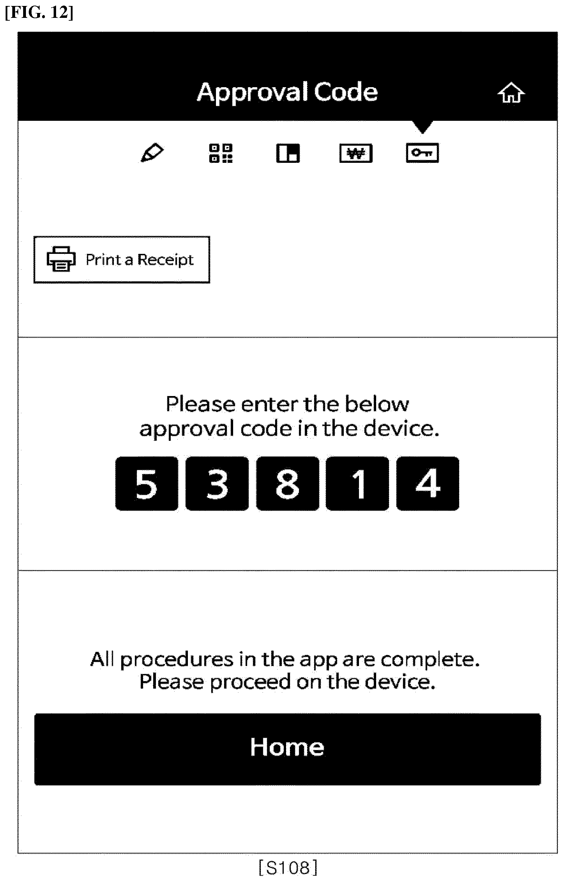

Next, in step S108, when the payment is completed, as illustrated in FIG. 12, the approval code is displayed on the screen of the user terminal 300.

Next, in step S109, the unmanned reception machine 100 receives the approval code displayed on the user terminal 300 by the input of the user.

Next, in step S110, the unmanned reception machine 100 checks whether the input approval code matches the approval code which is provided to the user terminal 300 and when the approval codes match, outputs a label sheet according to the fare payment of the mail or courier item. Further, regardless of the fare payment, the unmanned reception machine 100 may output the label sheet including the measurement information of the mail or courier item or the approval code.

Next, in step Sill, when the mail or courier item with the label sheet attached thereon is inserted, the unmanned reception machine 100 accommodates and stores the mail or courier item in a storage box.

Finally, in step S112, the user terminal 300 requests to issue a receipt according to the completed payment and outputs the receipt to confirm the payment. The above step may be performed immediately after receiving the approval code in step S108.

According to the exemplary embodiment of the present invention, through this process, before visiting the location where the unmanned reception machine 100 is equipped, the user may perform reception in advance by inputting mail information including addresses of the sender and the recipient through the user terminal 300. Therefore, a process of directly inputting information through the unmanned reception machine 100 and a process of waiting to input information may be omitted and thus the time may be saved. Further, the user terminal 300 interworks with the unmanned reception machine 100 to receive information measured in the unmanned reception machine 100 in real time to calculate and pay the delivery fare so that the unmanned reception may be allowed without interworking with the server.

In the meantime, FIG. 9 is a flowchart for explaining a method of providing measurement information to a user terminal through a near-field wireless communication in step S105 of FIG. 8.

In step S200, the unmanned reception machine 100 guides an access screen for accessing the user terminal 300 using near-field wireless communication.

Next, in step S201, the user terminal 300 activates the near-field communication module and tries to access the unmanned reception machine 100. The near-field wireless communication includes a beacon using Bluetooth and near field communication (NFC).

Next, in step S202, the unmanned reception machine 100 transmits measurement information obtained by measuring the volume or weight of the mail or courier item to the user terminal 300 connected through the near-field wireless communication. Further, the approval code for the mail or courier item may be included to be transmitted. Furthermore, information on the entire usage history of the unmanned reception machine 100 may also be included to be transmitted.

FIG. 10 is a flowchart for explaining a method of providing measurement information to a user terminal using a code recognition method by an unmanned reception machine in step S105 of FIG. 8.

First, in step S300, the unmanned reception machine 100 generates the measurement information obtained by measuring the volume or the weight of the mail or courier item as a code in the code generating unit. When the code is generated, the approval code for the mail or courier item and the entire situation information for the recent usage history of the unmanned reception machine 100 are selectively included to be generated as a code. In this case, the type of code may include a barcode, a QR code, or an NFC tag.

Next, in step S301, the code generated by the unmanned reception machine 100 is output to the screen.

Next, in steps S302 and S303, a code reader matching the type of code to be recognized by the user terminal 300 is activated and a screen of the unmanned reception machine 100 is scanned.

Next, in step S304, the user terminal 300 recognizes the code output to the screen of the unmanned reception machine 100 through the code reader.

Finally, in step S305, the user terminal 300 may receive the measurement information, the approval code, and the entire storage situation information of the unmanned reception machine 100 included in the code by recognizing the code.

As described above, the user terminal 300 receives the measurement information measured by the unmanned reception machine 100 through the near-field wireless communication or code recognition and the approval code so that fare payment and payment which are performed by the unmanned reception machine in the related art may be omitted.

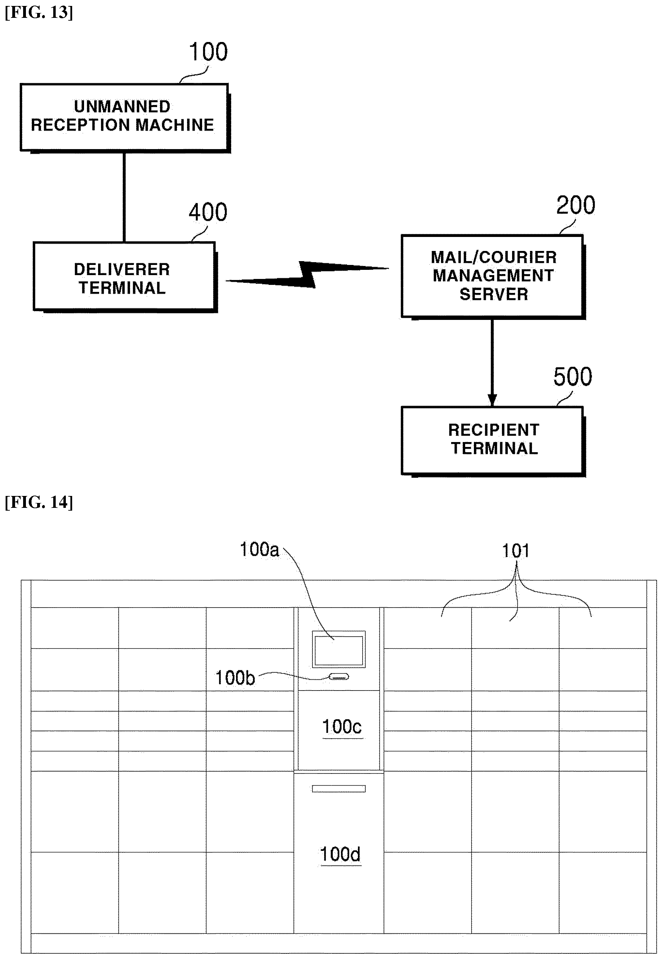

Next, an unmanned storage and reception service which enables unmanned storage and reception of a mail or courier item which has been already delivered will be described with reference to FIGS. 13 to 21.

FIG. 13 is a view illustrating a network configuration of an unmanned mail/courier management system according to another exemplary embodiment of the present invention and FIG. 14 is an exemplary view illustrating an outer appearance of an unmanned reception machine which is applied to an unmanned mail/courier management system according to another exemplary embodiment of the present invention.

An unmanned mail/courier management system according to another exemplary embodiment of the present invention includes an unmanned reception machine 100, a mail/courier management server 200, a deliverer terminal 400, and a recipient terminal 500.

According to another exemplary embodiment of the present invention, the unmanned reception machine 100 transmits storage information for the unmanned reception machine 100 to the mail/courier management server 300 through the deliverer terminal 400 without being not directly connected to the mail/courier management server 200 so that combined management is available.

As illustrated in FIG. 14, the unmanned reception machine 14 may basically include a plurality of unit storage boxes 101 in which mail or courier items are stored. Further, the unmanned reception machine 14 may include an input unit 100a which inputs a storage setting for each unit storage box 101. Further, if necessary, the unmanned reception machine 100 may include a configuration (for example, an output unit 100b, a measurement unit 100c, and a storage box 100d for accommodation) for the unmanned reception service.

The unmanned reception machine 100 assigns an identification number (hereinafter, a storage box number) to each unit storage box 101 and opens a door of each unit storage box 101 by inputting a passcode.

Further, when the storage setting for the mail or courier item is input through the input unit 100a, the unmanned reception machine 100 generates input storage information as a code and outputs the generated code to the screen of the input unit 100a.

Here, the code is generated to transmit storage information of the mail or courier item to the mail/courier management server 200 through the deliverer terminal 400 by the unmanned reception machine 100 in which network connection is never constructed. Any type of code may be applicable if a sufficient information amount which may include the storage information can be stored. For example, a one-dimensional or two-dimensional barcode, an RFID code, a QR code, or an NFC tag may be applied.

In the meantime, when the code is generated, the unmanned reception machine 100 may include only storage information of the unit storage box 101 to which unmanned storage is set to generate the code. However, the unmanned reception machine 100 may include the storage situation information for the entire storage boxes of the unmanned reception machine 100 including the storage information of the corresponding unit storage box 101 to generate a code. In this case, whenever the unmanned storage is set, the unmanned reception machine 100 transmits not only the storage information for each unit storage box 101, but also the storage situation information for the entire unmanned reception machine 100.

In the meantime, the code generation in the unmanned reception machine 100 may be performed before receiving the storage setting from the sender. For example, when a menu for storage setting is selected by the deliverer, for example, a selecting signal of a "storage" button is input, the unmanned reception machine 100 includes the entire storage situation information for a plurality of unit storage boxes at the present time to generate a code and outputs the generated code to the screen. When the deliverer terminal 400 scans the screen to recognize the output code on the screen and inputs the storage setting for an available unit storage box among the plurality of unit storage boxes through an application, the entire storage situation information obtained by input storage information and recognition may be transmitted to the mail/courier management server 200. When a door passcode for the storage information is generated, the mail/courier management server 200 which receives the storage information through this process may apply the same key generating function to generate the same door passcode as that of the unmanned reception machine.

The deliverer terminal 400 means a terminal of a deliverer who delivers the mail or courier item. The deliverer may be a courier of a parcel delivery service company or an individual or a seller.

The deliverer terminal 400 recognizes the code generated by the unmanned reception machine 100 to obtain storage information corresponding to the code. The deliverer terminal 400 transmits the obtained storage information to the mail/courier management server 200.

To this end, a reader according to a type of code is mounted in the deliverer terminal 400. For example, in the case of a QR code, the deliverer terminal 400 uses a QR code reader to scan the code. In the case of the NFC tag, the deliverer terminal 400 uses an NFC tag reader to tag the tag by a non-contact manner.

The deliverer terminal 400 may use a portable terminal which is personally possessed by the deliverer, that is, a smart phone. However, the deliverer terminal is not limited thereto and if the terminal is installed with a code reader, like a dedicated scanner which is applied to item delivery and accesses the mail/courier management server 200 to transmit and receive data, the terminal is applicable regardless of the type of terminal.

Before recognizing the code, the deliverer terminal 400 executes the code reader and takes the code reader close to the screen 102 of the unmanned reception machine 100. When the code is not output on the screen 102 of the unmanned reception machine 100 but is output using an NFC dongle or a printer connected to the unmanned reception machine 100, the deliverer terminal 400 is scanned (or tagged) to a code output end.

After scanning, the deliverer terminal 400 outputs the obtained storage information to the screen and receives additional information required for delivery such as a sender contact number, a recipient contact number, a deposit account for payment on delivery, or a fare, in addition to additional storage information, from the output screen. The additional information is input by manipulation of the deliverer and storage information which is obtained at the time of scanning a code generated by the unmanned reception machine 100 may be additionally input by the deliverer. Alternatively, when the deliverer accepts the items to be delivered, additional information is input in advance in a delivery reception desk and the additional information is called to be set at a time of scanning the code generated by the unmanned reception machine 100.

When the additional information is input, the deliverer terminal 400 transmits the input additional information to the mail/courier management server 200 together with the storage information. Therefore, whenever the deliverer terminal 400 stores the mail or courier item in the unmanned reception machine 100, the deliverer terminal 100 transmits the storage information and the additional information to the mail/courier management server 200.

In this case, the storage information may be transmitted to the mail/courier management server 200 in the form of a code generated in the unmanned reception machine 100, like the QR code or the NFC tag. Further, as the additional information, in addition to the recipient contact number, a recipient name and an address may be further include and a deliverer name and a title of a delivery service company of the deliverer may be included as deliverer information.

In the meantime, the deliverer terminal 400 may be implemented to perform configurations such as code recognition from the unmanned reception machine 100, inputting of additional information required for delivery, transmission of storage information to the mail/courier management server 200 through one dedicated application. In this case, the deliverer terminal 400 downloads and installs the dedicated application through the mail/courier management server 200 or the online market and executes the installed dedicated application. The mail/courier management server 200 collects storage information corresponding to the code from the deliverer terminal 400, that is, storage information for the unit storage box 100 to store the storage information for every unmanned reception machine. The mail/courier management server 200 inquires recipient contact number from the additional information received together with the storage information and transmits a message for notifying the storage information to the recipient terminal 500.

Therefore, the recipient terminal 500 checks the message from the mail/courier management server 200 and receives the items stored in the unit storage box 101 number.

In this case, in the recipient terminal 500, a door passcode (or an approval code) may be included in the message received from the mail/courier management server 200. When the delivery fare is paid in advance, the door passcode is immediately displayed and when the payment type is a payment on delivery, the door passcode may be displayed after completely making a payment. Therefore, the recipient checks the door passcode included in the message and inputs the door passcode in the unmanned reception machine 100 to receive the items.

Further, in the recipient terminal 500, information for installing a dedicated application required to check the storage information may be included in the message received from the mail/courier management server 200. In this case, the recipient terminal 500 installs the application and executes the installed application to inquire the storage information of the corresponding recipient and the door passcode.

In the meantime, when the dedicated application required for checking storage information is already installed in the recipient terminal 500, the mail/courier management serve 200 may send a message notifying the storage information to the recipient terminal 500 as a push notification through the dedicated application.

In the meantime, the above-described additional information required for delivery such as the deliverer contact number, the recipient contact number, an account for payment on delivery, or a fare for the deliverer terminal 400 may also be input by the unmanned reception machine 100. That is, the unmanned reception machine 100 may receive the additional information together with the storage information through the input unit 100a and the additional information received by the unmanned reception machine 100 may be generated as a code together with the storage information.

The unmanned reception machine for implementing as described above is configured as follows.

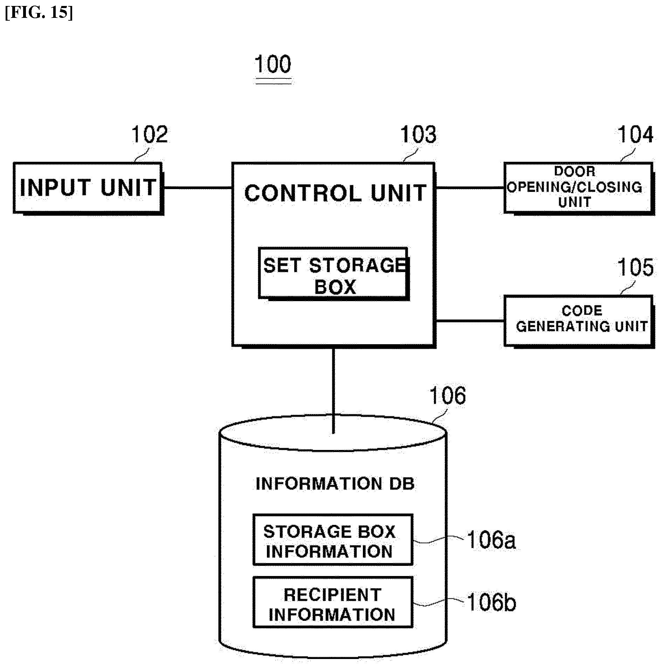

Referring to FIG. 15, an unmanned reception machine 100 according to another exemplary embodiment of the present invention includes an input unit 102, a control unit 103, a door opening/closing unit 104, a code generating unit 105, and an information database 106.

The configuration is illustrates by dividing the unmanned reception machine 100 as hardware. As mechanisms, the unmanned reception machine 100 includes a plurality of unit storage boxes 101 in which a mail or courier item is stored, as illustrated in FIG. 14 and a door is provided in each unit storage box 101. Further, the unmanned reception machine 100 may assign an identification number to each unit storage box 101.

As the input unit 102, a unit which is capable of displaying and inputting information required for storage setting to the unmanned reception machine 100 is included. The manipulating unit may include a keypad, a keyboard, and a mouse and further include a virtual keyboard using touch input. The virtual keyboard may be formed to be integrated with a touch screen.

The door opening/closing unit 104 controls the door provided in each unit storage box 101 to be opened and closed. That is, the door opening/closing unit 104 opens the door by input of the door passcode.

The code generating unit 105 generates an arbitrary code selected from a barcode, a QR code, an RFID code, and NFC tags.

The control unit 103 displays and guides a menu screen for storage setting and a menu screen for reception confirmation on the input unit 102.

For example, specifically, the control unit 103 receives the selection of the mail or courier item storage menu from the deliverer through the menu screen for storage setting and receives setting information on reception/delivery selection for selecting whether to receive or store the items, the unit storage box number selection, and storage setting. The control unit 103 sets whether to store the mail or courier item for each unit storage box based on the setting information. When the storage setting of the mail or courier item is completed, the control unit 103 stores the storage information which is completely set in the information database 106.

The information database 106 classifies the storage box information 106a and the recipient information 106b to generate a database. The storage box information 106a includes storage information set for each unit storage box and entire storage information representing the entire storage situation of the unmanned reception machine 100. When information on the recipient is additionally input on the menu screen for storage setting, the reception information 106b is stored by being matched with the unit storage box number and the storage information.

Further, the control unit 103 receives the door passcode from the recipient on the menu screen for reception confirmation, authenticates the input door passcode and transmits the authentication result to the door opening/closing unit 104. The door of each unit storage box may be opened in accordance with the authentication result.

Further, the control unit 103 transmits the storage information which is received at the time of storage setting of the mail or courier item to the code generating unit 104 to generate a code. When additional information required for the delivery is input in the unmanned reception machine 100 in addition to setting information on the recipient or deliverer selection, unit storage box number selection, storage setting, the control unit 103 transmits the input additional information to the code generating unit 104 to generate a code together with the storage information. Here, the additional information required for delivery includes the deliverer contact number, the recipient contact number, a deposit account for payment on delivery, and fare.

Further, when the control unit 120 transmits the received storage information to the code generating unit 140, the control unit 120 detects the entire storage information representing the entire storage box situation for the unmanned reception machine 100 from the storage box information 152 already stored in the information database 150 to transmit the detected entire storage information to the code generating unit 140. By doing this, the code generating unit 140 generates a code by including not only the storage information or the unit storage box but also the entire storage information of the unmanned reception machine including the unit storage box at the present time.

Accordingly, according to another exemplary embodiment of the present invention, the entire storage information of the unmanned reception machine 100 is transmitted to the mail/courier management server 200 through the deliverer terminal which scans the code generated by the unmanned reception machine 100.

In the meantime, the unmanned reception machine 100 according to another exemplary embodiment of the present invention may apply a battery as a power source required for driving. In this case, a communication line for network construction and a power line for supplying power are not necessary so that the unmanned reception machine 100 may be easily installed regardless of locations. Further, the unmanned reception machine 100 includes a battery replacing module so that a manager or a collector who collects unmannedly received mail or courier items replaces the battery.

Further, the unmanned reception machine 100 according to another exemplary embodiment of the present invention may provide a "call center inquiry" button to immediately connect a call center. In this case, at the moment when the call center inquiry button is selected by the deliverer or the recipient, the unmanned reception machine 100 generates the entire storage information of the unmanned reception machine 100 as a code and outputs the generated code on the screen to guide the deliverer or recipient who requests the call center inquiry to recognize the code. When the deliverer or recipient who requests the call center inquiry recognizes the code, a screen for connecting to the call center is provided and the entire storage information of the unmanned reception machine 100 included in the code is transmitted to a server of the call center. The call center may quickly respond to customers based on the information received from the terminal of the deliverer or recipient who requests the call center inquiry through this process. Here, the server of the call center may be a mail/courier management server or a separate server.

In the meantime, a configuration of the unmanned reception machine 100 described above may be implemented by a software control program or one application. In this case, the software control program or the application may be stored in a predetermined computer readable recording medium. For example, the recording medium may be a hard disk, a flash memory, a RAM, or ROM as an embedded type of each reproducing device or an optical disk such as a CD-R or CD-RW, a compact flash card, a smart media, a memory stick, or a multimedia card as an external media.

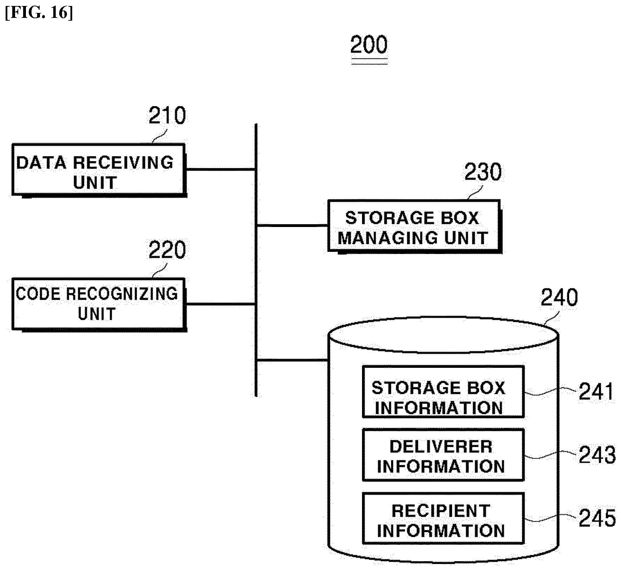

FIG. 16 is a detailed diagram of a mail/courier management server which is applied to an unmanned mail/courier reception system according to another exemplary embodiment of the present invention.

A mail/courier management server 200 includes a data receiving unit 210, a code recognizing unit 220, a storage box managing unit 230, and a database 240.

The data receiving unit 210 receives storage information for the unmanned reception machine 100 (see FIG. 1) from the delivery terminal 300 (see FIG. 1). The received data is transmitted to the storage box managing unit 230. When the storage information is received as a code generated in the unmanned reception machine 100 (see FIG. 1), the storage information is transmitted to the code recognizing unit 220.

The code recognizing unit 220 recognizes an arbitrary code to obtain storage information included in the code.

The storage box managing unit 230 collects the storage information received through the data receiving unit 210 to store the storage information in the database 240. When the storage information is obtained through the code recognizing unit 220, the storage box managing unit 230 receives the storage information from the code recognizing unit 220 to store the storage information in the database 240.

Here, the storage information received through the data receiving unit 210 includes all the storage information set in the unmanned reception machine 100 (see FIG. 1) and additional information which is additionally set in the deliverer terminal 400 (see FIG. 1). Therefore, the storage information received through the data receiving unit 210 includes an unmanned reception machine and unit storage box number, an item type, a deliverer (or a name of a company of the deliverer) contact number, a recipient contact number, a name or address of a recipient.

In the meantime, when the entire storage information for the unmanned reception machine is included in the storage information received through the data receiving unit 210, the storage box managing unit 230 updates the entire storage information in the database 240 to store the entire storage information. In this case, when the item storage is set by the deliverer, the storage box managing unit 230 receives a current storage situation of the unmanned reception machine from the deliverer terminal so that it is possible to back up in real time and update the entire storage information as recent information whenever the item storage is set. The updated entire storage information of the unmanned reception machine is provided to be inquired so that the call center responds to the customer.

An unmanned mail/courier storage method according to another exemplary embodiment of the present invention will be described with reference to the above-described configuration.

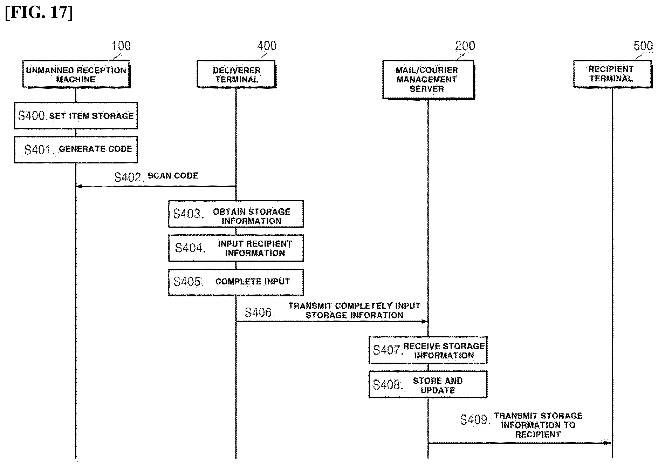

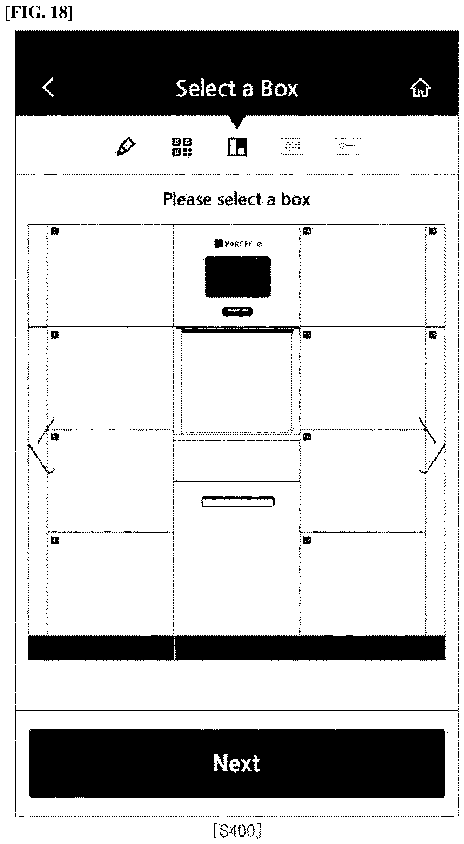

FIG. 17 is a flowchart illustrating a control method of an unmanned mail/courier storage system according to another exemplary embodiment of the present invention and FIGS. 18 to 20 are views a setting screen provided in an unmanned mail/courier management method according to another exemplary embodiment of the present invention.

First, in step S400, the unmanned reception machine 100 receives storage settings for a plurality of unit storage boxes from a deliverer who delivers a mail or courier item (hereinafter, referred to an item).

In the above step, a menu screen for storage setting is displayed on a screen of the unmanned reception machine 100 and the storage setting may be performed through this menu screen. For example, in the menu screen for storage setting, an input section for inputting simple storage information such as reception/delivery selection for selecting whether the item is stored or received, storage box number selection (see a setting screen of FIG. 18), and storage setting is guided and the storage information is input.

Next, in step S401, when an input for storage setting is completed, the unmanned reception machine 100 generates the storage information as a previously defined code. The unmanned reception machine 100 outputs the generated code on the screen or outputs the code using an NFC dongle or a printer.

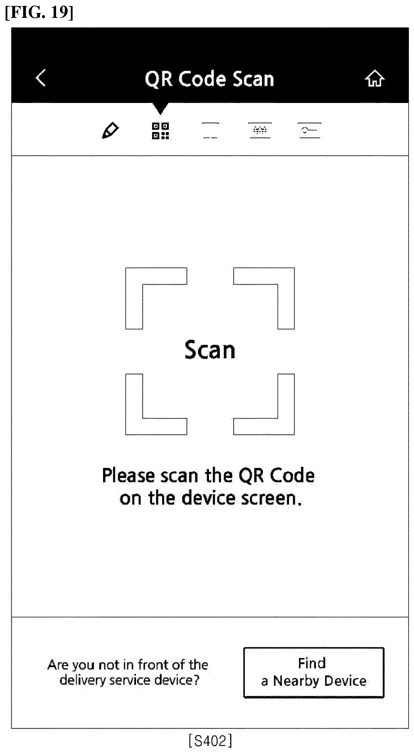

Next, in step S402, the deliverer terminal 400 approaches the screen of the unmanned reception machine 100 and scans the code output on the screen or tags the NFC dongle connected to the unmanned reception machine 100 to recognize the code. For example, when the code is a QR code, the deliverer terminal 400 activates a screen for scanning the QR code as illustrated in FIG. 19 to recognize the QR code. When the code is an NFC code, the deliverer terminal 400 tags (or touches) the NFC dongle to recognize the code.

Next, in step S403, the deliverer terminal 400 obtains the storage information included in the code by recognizing the code. The obtained storage information is output on the screen of the deliverer terminal 400 to be provided to the deliverer to confirm the storage information.

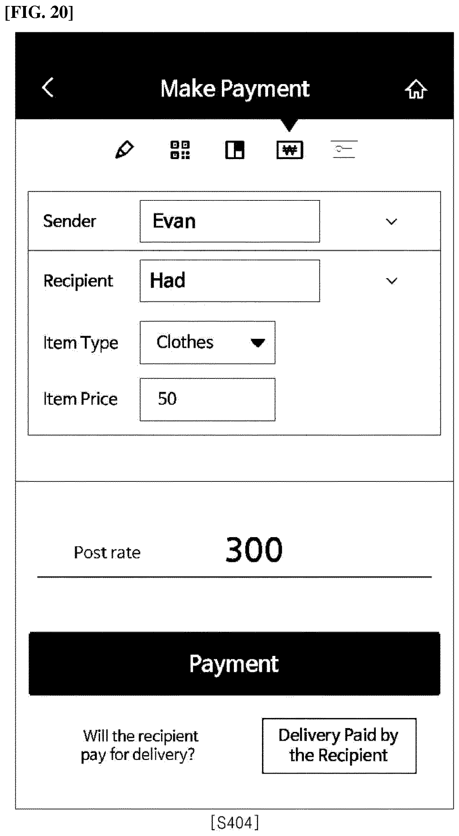

Next, in step S404, the deliverer terminal 400 may receive additional information required for the delivery through an application. For example, as illustrated in the screen of FIG. 20, a name or a contact number of a deliverer, a name or a contact number of a recipient, an item type, a delivery fare, and a deposit account for payment on delivery may be additionally input. Even though it is illustrated in FIG. 17 that the input step is performed after the step S120 of scanning the code generated by the unmanned reception machine 100 by the deliverer terminal 400, but is not limited thereto. Therefore, when the item is deposited in a delivery reception desk, the deliverer may input the additional information in advance. In this case, in step S404, the deliverer terminal 400 calls the additional information which is input in advance to match the additional information and the storage information.

Next, in step S405, the deliverer terminal 400 selects a menu for completing input.

Next, in step S406, the deliverer terminal 400 transmits the storage information obtained by recognizing the code and the additional information to the mail/courier management server 200.

In the above steps S402 to 406 may be performed by a dedicated application installed in the deliverer terminal 400 or a software program.

Next, in steps S407 and S408, the mail/courier management server 200 receives the storage information for the unmanned reception machine 100 from the deliverer terminal 400 and collects and stores the storage information for every unmanned reception machine in the database.

In step S407, the mail/courier management server 200 receives the storage information from the deliverer terminal 400 whenever the deliverer stores an item in the unmanned reception machine.

Finally, in step S408, the mail/courier management server 200 inquires the contact number of the recipient for the storage information for the unmanned reception machine to transmit a message informing the recipient terminal 500 of the storage information.

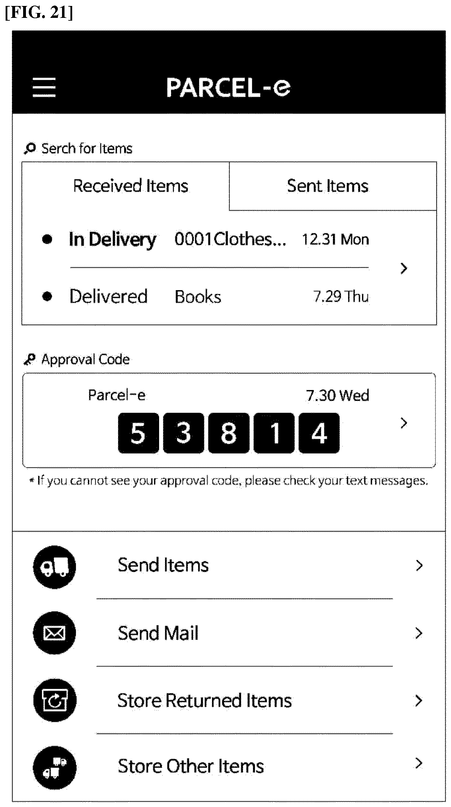

Therefore, the recipient terminal 500 may receive the information on the item storage from the mail/courier management server 200 by means of a notification message. The received notification message includes information on the unit storage box in which the item is stored so that the recipient checks the notification message and safely receives the item. Alternatively, as illustrated in FIG. 21, the recipient may receive a notification message including a door passcode (approval code). In this case, the recipient checks the door passcode (approval code) included in the notification message and inputs the passcode in the unmanned reception machine 100 to receive the goods.

Further, the received notification message may include information for installing a dedicated application required to check the information on the item storage. In this case, the recipient terminal 40 installs the dedicated application according to the information for installing the dedicated application and executes the installed dedicated application to inquiry and check the information on the item storage.

Further, when the dedicated application is already installed in the recipient terminal 500, the recipient terminal 500 may receive the notification message as a push notification through the dedicated application. The dedicated application may request reception confirmation later through the recipient terminal 500 after receiving the stored item. Further, when the payment on delivery is selected, wire transfer or credit card payment may be enabled through the dedicated application.

According to this, when the recipient inputs the unit storage box number or the door passcode in the unmanned reception machine 100, the unmanned reception machine 100 opens a door of the corresponding unit storage box through authentication for the door passcode so that the recipient may safely receive the item.

The door passcode may be set by the unmanned reception machine 100 or the mail/courier management server 200 depending on a service type.

For example, when the door passcode is set by the unmanned reception machine 100, before the step S110 of generating the storage information input by the deliverer as a code, the unmanned reception machine 100 arbitrarily issues the door passcode for the corresponding unit storage box and generates a code including the issued door passcode. The door passcode included in the code is transmitted to the mail/courier management server 200 through the deliverer terminal 400 and when the mail/courier management server 200 transmits a message for informing the recipient terminal 500 of the storage information, the door passcode is included in the message to be transmitted. In this case, the unmanned reception machine 100 encrypts the door passcode included in the code so that even though the deliverer terminal 400 recognizes the code, the deliverer terminal 400 cannot identify the door passcode included in the code. Further, when the mail/courier management server 400 transmits the message to the recipient terminal 400, the door passcode may be provided such that only the storage information excluding the door passcode is identified and the door passcode is identified through the dedicated application.

As another example, the door passcode may be set by the mail/courier management server 200. In this case, in order to authenticate the door passcode set in the mail/courier management server 200 by the unmanned reception machine 100, the door passcode set in the mail/courier management server 200 needs to be synchronized also in the unmanned reception machine 100.

To this end, the unmanned reception machine 100 and the mail/courier management server 200 apply the same key generating function which generates a door passcode for the unit storage box so that the door passcode set in the unmanned reception machine 100 is the same as the door passcode set in the mail/courier management server 200. For example, when the storage setting for the arbitrary unit storage box is input in the unmanned reception machine 100, the door passcode of the unit storage box is issued based on the key generating function and the issued door passcode may be stored in the unmanned reception machine 100 without being included in the code. The mail/courier management server 200 issues the door passcode based on the same key generating function as that of the unmanned reception machine 100 by the storage information received from the delivery terminal 400. In this case, the mail/courier management server 200 issues the door passcode based on variables such as an order of issuing the door passcode in the unmanned reception machine 100 or the storage information so that the door passcode issued by the mail/courier management server is the same as the door passcode issued by the unmanned reception machine 100. Since the unmanned reception machine 100 and the mail/courier management server 200 respectively issue the door passcode, the above-described method may solve an information error or a weak security problem which may be incurred while transmitting the door passcode through the delivery terminal 400. Further, even though the deliverer inputs the storage information through the application of the deliverer terminal without setting the storage information in the unmanned reception machine 100, the unmanned reception machine 100 may determine and manage the storage setting information of the storage box by the key generating function by itself.

In the meantime, the door passcode may include a plurality of different door passcodes for a purpose of the recipient and for a purpose of the deliverer and/or manager. For example, the door passcode is classified into a door passcode for a customer, a door passcode for a delivery, and a door passcode for management and different passcodes therefor are generated to be issued. When the customer (recipient) receives the item in the unmanned reception machine 100, the door passcode for a customer is used. When a delivery error is incurred or the deliverer takes back the item, a door passcode for a delivery is issued and used. Further, a door passcode for management is issued to the manager to manage the unmanned reception machine 100. In this case, the door passcode may be separately issued by the unmanned reception machine 100 or the mail/courier management server 200 according to the purpose. Alternatively, when the unmanned reception machine 100 or the mail/courier management server 200 respectively generate the door passcode at first, the door passcodes may be collectively generated to be issued for every purpose.

In the meantime, in step S401, the unmanned reception machine 100 may generate the code including the entire storage situation information for the unmanned reception machine 100 together with the storage information for the arbitrary unit storage box input by the deliverer.

By doing this, the mail/courier management server 200 collects the entire storage situation for the unmanned reception machine 100 together with the storage information set by the deliverer through the deliverer terminal 400 at the present time to perform real time back-up. Therefore, the mail/courier management server 200 collectively and remotely manages the unmanned reception machine 100 without being connected to the unmanned reception machine 100 and is connected to the call center to quickly respond to inquiries generated when the recipient or the deliverer receives the item from the unmanned reception machine.

From the foregoing, it will be appreciated that various embodiments of the present disclosure have been described herein for purposes of illustration, and that various modifications may be made by those skilled in the art without departing from the scope and spirit of the present disclosure. The exemplary embodiments disclosed in the specification of the present invention will not limit the present disclosure. The scope of the present disclosure shall be construed on the basis of the following claims in such a manner and it should be construed that all of the technical ideas included within the scope equivalent to the claims belong to the present disclosure.

The present invention is applicable to a mail service or a courier service related technical field which provides postal receipt, storage, and reception service of mail or courier items such as post offices or parcel delivery service companies.

## Claims

1. An unmanned mail/courier management system, comprising:
an application which is installed in a user terminal and receives mail information of a sender and a recipient for a mail or courier item from a user to unmannedly provide a reception registration service;
a mail/courier management server which interworks with the application to provide and manage an unmanned reception service; and
an unmanned reception machine which accommodates the mail or courier item to measure at least one of a weight and a volume, provides the measured information to the user terminal, and outputs a label sheet for the measured mail or courier item.

2. The unmanned mail/courier management system according to claim 1, wherein the application calculates a delivery fare based on the measured information provided from the unmanned reception machine and mail information which is input in advance from the user or requests the mail/courier management server to calculate the delivery fare and receives the calculated delivery fare.

3. The unmanned mail/courier management system according to claim 1, wherein the unmanned reception machine generates a code for the measured information of the mail or courier item and outputs the generated code on a screen and the user terminal recognizes the code output on the screen to receive the measured information of the mail or courier item.

4. The unmanned mail/courier management system according to claim 1, wherein the unmanned reception machine is connected to the user terminal by a near-field wireless communication to transmit the measured information of the mail or courier item to the user terminal.

5. The unmanned mail/courier management system according to claim 1, wherein the unmanned reception machine provides an approval code for the mail or courier item to the user terminal together with the measured information of the mail or courier item.

6. The unmanned mail/courier management system according to claim 5, wherein the application encrypts the approval code so as not to be displayed on the screen before paying for the delivery fare and when the payment for the delivery fare is completed through the user terminal, displays the approval code on the screen.

7. The unmanned mail/courier management system according to claim 6, wherein the unmanned reception machine receives the approval code through the input of the user and when the received approval code matches the approval code which is provided to the user terminal, outputs a label sheet according to fare payment of the mail or courier item.

8. The unmanned mail/courier management system according to claim 5, wherein the unmanned reception machine generates the approval code for the mail or courier item together with the measured information of the mail or courier item as a code and outputs the generated code on the screen and the user terminal recognizes the code output on the screen to obtain the approval code for the mail or courier item and the measured information of the mail or courier item.

9. The unmanned mail/courier management system according to claim 5, wherein the unmanned reception machine includes one or more reception storage boxes which temporarily store the mail or courier item with the label sheet attached thereon until the mail or courier item is collected and when the measured information of the mail or courier item is provided to the user terminal, entire storage situation information which is temporarily stored in the one or more reception storage box is also provided.

10. An unmanned reception machine, comprising:
an accommodating unit in which a mail or courier item is inserted;
a volume/weight measuring unit which measures at least one of a volume and a weight of a mail or courier item inserted in the accommodating unit;
a control unit which provides measurement information of the mail or courier item measured by the volume/weight measuring unit to a user terminal; and
a label output unit which outputs a label sheet for the mail or courier item measured by the volume/weight measuring unit.

11. The unmanned reception machine according to claim 10, wherein the control unit provides an approval code for the mail or courier item to the user terminal together with the measurement information of the mail or courier item measured by the volume/weight measuring unit.

12. The unmanned reception machine according to claim 11, wherein the control unit receives the approval code input by the user and determines whether the input approval code matches the approval code provided to the user terminal and when the approval codes match, requests the label output unit to output a label sheet of the mail or courier item.

13. The unmanned reception machine according to claim 11, further comprising:
a code generating unit which generates a code including measurement information of the mail or courier item measured by the volume/weight measuring unit and the approval code for the mail or courier item,
wherein the control unit outputs the code generated by the code generating unit on a screen to provide the code to the user terminal.

14. The unmanned reception machine according to claim 11, further comprising:
one or more reception storage boxes which temporarily store the mail or courier item with the label sheet attached thereon until the mail or courier item is collected,
wherein the control unit provides entire storage situation information which is temporarily stored in the one or more reception storage box to the user terminal together with the measurement information.

15. An unmanned mail/courier management method, comprising:
receiving mail information including addresses of a sender and a recipient for a mail or courier item from a user by an application installed in a user terminal;
measuring at least one of a weight and a volume for the mail or courier item by an unmanned reception machine;
providing measurement information of the mail or courier item to the user terminal, by the unmanned reception machine; and
outputting a label sheet for the mail or courier item by the unmanned reception machine.

16. The unmanned mail/courier management method according to claim 15, further comprising:
calculating a delivery fare based on the measurement information provided from the unmanned reception machine and mail information input from the user or requesting the mail/courier management server to calculate the delivery fare to receive the calculated delivery fare, by the application.

17. The unmanned mail/courier management method according to claim 15, wherein the providing of measurement information of the mail or courier item to the user terminal includes:
generating the measurement information as a code and outputting the generated code on a screen by the unmanned reception machine; and
scanning a screen of the unmanned reception machine to obtain the measurement information included in the code output on the screen by the user terminal.

18. The unmanned mail/courier management method according to claim 15, wherein in the providing of measurement information of the mail or courier item to the user terminal, the unmanned reception machine provides an approval code for the mail or courier item to the user terminal together with the measurement information of the mail or courier item.

19. The unmanned mail/courier management method according to claim 18, wherein after the providing of measurement information of the mail or courier item to the user terminal, the application of the user terminal encrypts the approval code so as not to be displayed on the screen before paying for the delivery fare and when the payment for the delivery fare is completed through the user terminal, displays the approval code on the screen.

20. The unmanned mail/courier management method according to claim 19, further comprising:
after the providing of measurement information of the mail or courier item to the user terminal,
receiving the approval code input by the user and identifying whether the input approval code matches the approval code provided to the user terminal, by the unmanned reception machine.

21. An unmanned mail/courier management system, comprising:
an unmanned reception machine which includes a plurality of unit storage boxes which stores a mail or courier item and when a storage setting for the unit storage box is input by manipulation of a deliverer who delivers the mail or courier item, generates the input storage information as a code and outputs the code on a screen;
a deliverer terminal which recognizes the code generated by the unmanned reception machine to transmit storage information corresponding to the code; and
a mail/courier management server which collects and stores the storage information corresponding to the code from the deliverer terminal.

22. The unmanned mail/courier management system according to claim 21, wherein after recognizing the code generated by the unmanned reception machine, when the deliverer terminal receives additional information including at least one of a name or a contact number of a deliverer, a name or a contact number of a recipient, a delivery fare, and a deposit account for payment on delivery, the delivery terminal transmits the input additional information to the mail/courier management server together with the storage information corresponding to the code.

23. The unmanned mail/courier management system according to claim 21, wherein when a menu for storage setting is selected by the deliverer, the unmanned reception machine generates a code including the entire storage situation information for the plurality of unit storage boxes at the present time and outputs the code on the screen, and the deliverer terminal scans the code output on the screen through an application to recognize the entire storage situation information included in the code and when a storage setting for an available unit storage box among the plurality of unit storage boxes is input, transmits the input storage information and the recognized entire storage situation information to the mail/courier management server.

24. The unmanned mail/courier management system according to claim 22 or 23, wherein the mail/courier management server collects and stores information corresponding to the code from the deliverer terminal for every unit storage box and transmits a message informing of the storage information to the recipient contact number included in the additional information.

25. The unmanned mail/courier management system according to claim 24, wherein the mail/courier management server transmits the message for informing of the storage information including information for installing an application required for checking the storage information and when the application required for checking the storage information is already installed in the terminal of the recipient, a message for informing of the storage information is provided to the terminal of the recipient through the application as a push notification.

26. The unmanned mail/courier management system according to claim 21, wherein the code includes one of a barcode and a QR code, the unmanned reception machine outputs one of the barcode and the QR code on the screen, and the deliverer terminal scans the code output on the screen to recognize the code.

27. The unmanned mail/courier management system according to claim 21, wherein when the code is generated, the unmanned reception machine generates the entire storage situation information representing a storage situation for the entire unmanned reception machine including the unit storage box at the present time together with storage information for a corresponding unit storage box input by the deliverer.

28. The unmanned mail/courier management system according to claim 27, wherein the deliverer terminal transmits the entire storage situation information to the mail/courier management server together with the storage information for the unit storage box input by the deliverer and the mail/courier management server receives the entire storage situation information from the deliverer terminal to update and store the entire storage situation information for every unmanned reception machine in a database.

29. The unmanned mail/courier management system according to claim 21, wherein when a storage setting for the unit storage box is input by manipulation of the deliverer, the unmanned reception machine issues the door passcode and generates a code including the door passcode.

30. The unmanned mail/courier management system according to claim 21, wherein when a storage setting for the unit storage box is input by manipulation of the deliverer, the unmanned reception machine and the mail/courier management server apply the same key generating function of generating a door passcode for the unit storage box to issue the same door passcode generated in the unmanned reception machine and the mail/courier management server.

31. The unmanned mail/courier management system according to claim 29 or 30, wherein the door passcode includes a plurality of different door passcodes for a purpose of the recipient and for a purpose of the deliverer and/or manager.

32. A control method of an unmanned mail/courier management system, comprising:
receiving storage settings for a plurality of unit storage boxes by manipulation of a deliverer who delivers a mail or courier item, by an unmanned reception machine;
generating storage information input from the deliverer as a code and outputting the code on a screen by the unmanned reception machine;
recognizing the code output on a screen of the unmanned reception machine by a deliverer terminal; and
transmitting storage information corresponding to the code to a mail/courier management server by the deliverer terminal.

33. The control method of an unmanned mail/courier management system according to claim 32, wherein in the transmitting of storage information corresponding to the code to a mail/courier management server by a deliverer terminal, when the deliverer terminal receives additional information including at least one of a name or a contact number of a deliverer, a name or a contact number of a recipient, a delivery fare, and a deposit account for payment on delivery, the delivery terminal transmits the input additional information to the mail/courier management server together with the storage information corresponding to the code.

34. The control method of an unmanned mail/courier management system according to claim 33, further comprising:
after the transmitting of storage information corresponding to the code to a mail/courier management server by the deliverer terminal,
collecting and storing storage information corresponding to the code for every unit storage box from the deliverer terminal, by the mail/courier management server; and
transmitting a message for informing of the storage information to a recipient contact number included in the additional information, by the mail/courier management server.

35. The control method of an unmanned mail/courier management system according to claim 34, wherein in the transmitting of a message for informing of the storage information, the mail/courier management server transmits the message for informing of the storage information including information for installing an application required for checking the storage information and when the application required for checking the storage information is already installed in the terminal of the recipient, the mail/courier management server transmits provides a message for informing of the storage information to the terminal of the recipient through the application as a push notification.

36. The control method of an unmanned mail/courier management system according to claim 32, wherein in the generating of storage information as a code, the unmanned reception machine generates a code including the entire storage situation information representing a storage situation for the entire unmanned reception machine including the unit storage box at the present time together with storage information for a corresponding unit storage box input by the deliverer.

37. The control method of an unmanned mail/courier management system according to claim 32, wherein before the generating of storage information as a code, the unmanned reception machine or the mail/courier management server arbitrarily issues a door passcode for the unit storage box by manipulation of the deliverer and generates a code including the issued door passcode.
